# EUROPEAN PATENT SPECIFICATION

(11) **EP 4 191 114 B1**
(45) Date of publication and mention of the grant of the patent: **24.07.2024**
(21) Application number: 21212584.3
(22) Date of filing: 06.12.2021
(51) Int. Cl.: F16L 37/08, F16L 37/14

(54) **COUPLING DEVICE**
KOPPLUNGSVORRICHTUNG
DISPOSITIF DE COUPLAGE

(43) Date of publication of application: 07.06.2023
(73) Proprietor: MAHLE International GmbH, 70376 Stuttgart (DE)
(72) Inventor: Dr. Madry, Bartosz, 63-410 Skosna (PL)
(74) Representative: BRP Renaud & Partner mbB Rechtsanwälte Patentanwälte Steuerberater

(56) References cited:
- EP-A2- 2 293 004
- FR-A1- 2 819 573
- US-A1- 2015 176 729
- US-A1- 2018 283 589

## Description

The invention relates to a coupling device according to the generic term of claim 1.

EP 2 946 136 A1, which discloses the preamble of claim 1, discloses a coupling device with a metallic pipe of a heat exchanger and a metallic adapter. The pipe and the adapter are connected to each other by brazing, which is disadvantageously time-consuming and cost-intensive. A VDA-Connector can then be fitted to the adapter. The VDA-Connector is a connector standardized by the German Association of the Automotive Industry for devices in a motor vehicle.

EP 2 293 004 A2 discloses a coupling assembly for a vehicle air-conditioning unit comprises a tubular component and a coupling component for coupling the tubular component to a connecting part.

US 2018 / 0 283 589 A1 relates to a male portion of a quick VDA-connector for connecting a metallic hose to another component or to another hose.

US 2015 / 0 176 729 A1 discloses a hydraulic tube for a vehicle with a pipe having a pipe rib, and with a connector fitted around the pipe such that the pipe extends through opposite ends of the connector.

FR 2 819 573 A1 discloses a coupling device with a male piece, a female piece and a bayonet joint. The bayonet joint connects the female piece and the male piece like a bayonet via a bayonet joint.

It is therefore the object of the invention to provide an improved or at least alternative embodiment for a coupling device of the type described, in which the disadvantages described are overcome.

This object is solved according to the invention by the object of independent claim 1. Advantageous embodiments are the subject of the dependent claims.

A coupling device is provided for connecting a heat exchanger to a standardized connector. In particular, the standardized connector is a VDA-Connector standardized by the German Association of the Automotive Industry for devices in a motor vehicle. The coupling device thereby comprises a tubular piece and a hollow cylindrical adapter piece. The tubular piece is inserted into the adapter piece i.e. the adapter piece is slid onto the tubular piece along a mounting axis to a predetermined distance and the tubular piece is axially and preferably detachable fixed to the adapter piece. Further, the coupling device comprises a form-fitting unit and the form-fitting unit non-rotarably fixes the adapter piece to the tubular piece. In the present invention, the terms "radial" and "axial" and "circumferential" always refer to the mounting axis.

Due to the form-fitting unit, the tubular piece and the adapter piece are non-rotarably fixed and a material connection between the tubular piece and the adapter piece can be avoided. This can simplify the manufacture of the coupling device and reduce manufacturing costs. Moreover, material-non-bondable materials can be used for the tubular piece and the adapter piece. Advantageously, the tubular piece may be formed from metal and the adapter piece may be formed from plastic.

In an advantageous embodiment, the form-fitting unit may comprise a first form-fitting element and a second form-fitting element. The first form-fitting element may be formed on the tubular piece, and the second form-fitting element may be formed on the adapter piece. The first form-fitting element and the second form-fitting element may be axially insertable into one another and can be non-rotatably fixed to one another in a rotationally fixed manner in a circumferential direction surrounding the mounting axis. In this way, during assembly of the coupling device, the form-fitting elements can be inserted into one another and subsequently non-rotatably fixed the adapter piece to the tubular piece.

The tubular piece comprises an outer stop projection and the adapter piece comprises an inner stop recess. The stop projection is formed externally on the tubular piece and the stop recess is formed internally in the adapter piece. The stop projection and the stop recess are each formed to surround the mounting axis at least in certain regions. The stop projection thereby engages radially in the stop recess and, as a result, the adapter piece lies on the tubular piece axially in one direction. In other words, the stop projection and the stop recess form an axial stop for the adapter piece on the rotor piece.

According to the invention, transversely to the mounting axis, the tubular piece contains an outer contour lying on the outside of the stop projection and the adapter piece contains an inner contour lying on the inside of the stop recess. The outer contour and the inner contour fits tightly to each other and are rotationally asymmetrical. The inner contour and the outer contour enable the stop projection and the stop recess and, correspondingly, the tubular piece and the adapter piece to be non-rotatably fixed to one another in a circumferential direction surrounding the mounting axis.

Accordingly, the first form-fitting element may be represented by the outer contour of the tubular piece at the stop projection and the second form-fitting element may be represented by the inner contour of the adapter piece at the stop recess.

The outer contour of the tubular piece at the stop projection and the inner contour of the adapter piece at the stop recess may each be polygonal.

In an advantageous embodiment of the coupling device, it may be provided that the tubular piece comprises a locking groove and the adapter piece comprises at least one locking element. The locking groove is formed on the outside of the tubular piece and surrounds at least in regions the mounting axis. The at least one locking element is axially aligned and is radially resiliently formed on the adapter piece. The at least one locking element engages radially in the locking groove and the adapter piece is axially and preferably detachable fixed to the tubular piece. In addition, a radially inwardly directed projection may be formed at the end of the at least one locking element. The projection may engage radially in the locking groove, and thereby the at least one locking element may be securely fixed in the locking groove. A plurality of locking elements may be formed on the adapter piece and may be arranged side by side in a circumferential direction surrounding the mounting axis. The plurality of locking elements may be formed, for example, on the longitudinal end of the adapter piece by axially aligned cuts.

Advantageously, the coupling device may comprise a hollow cylindrical standardized connector. The adapter piece is then inserted into the standardized connector along the mounting axis. The standardized connector can then be axially and preferably detachable fixed to the adapter piece. In particular, the standardized connector may be a VDA-Connector, as already described above. An outer contour of the adapter piece can be adapted to an inner contour of the standardized connector in such a way that the adapter piece and the standardized connector can be axially fixed to each other.

Other important features and advantages of the invention will be apparent from the sub-claims, from the drawings and from the accompanying figure description with reference to the drawings.

It is understood that the above features, and those to be explained below, may be used not only in the combination indicated in each case, but also in other combinations or alone, without departing from the scope of the present invention.

Preferred embodiments of the invention are shown in the drawings and will be explained in more detail in the following description, wherein like reference signs refer to like or similar or functionally identical components.

It shows, in each case schematically
- Fig. 1: a sectional view of a coupling device according to the invention with a tubular piece and an adapter piece;
- Fig. 2: a view of the tubular piece of the coupling device according to the invention;
- Fig. 3: a view of the adapter piece of the coupling device according to the invention.

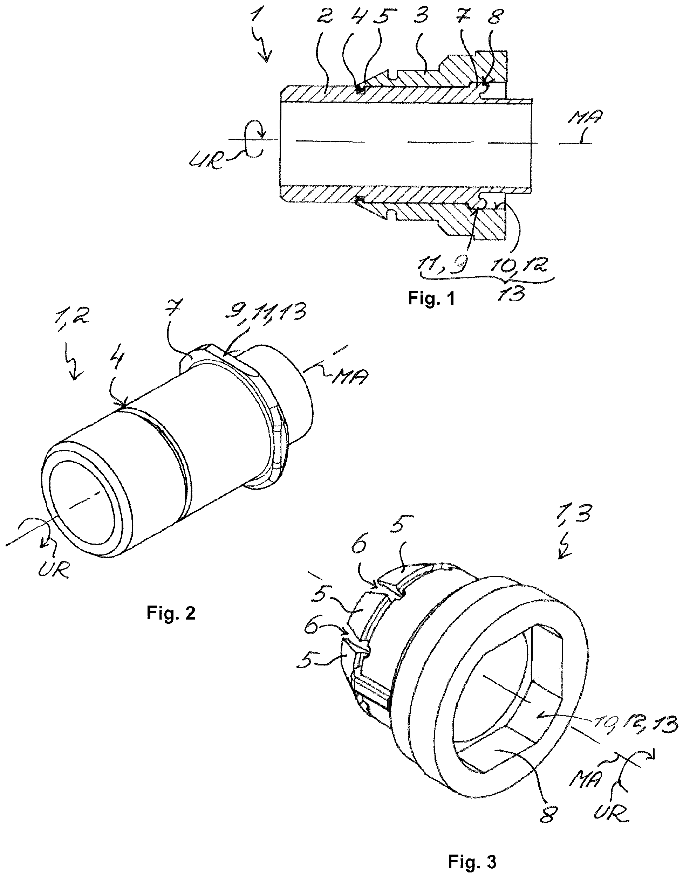

Fig. 1 shows a sectional view of a coupling device 1 according to the invention with a tubular piece 2 and a hollow cylindrical adapter piece 3. The tubular piece 2 is insertable into the adapter piece 3 along a mounting axis MA. The tubular piece 2 is made of metal and the adapter piece 3 is made of plastic. Fig. 2 shows a view of the tubular piece 2 and Fig. 3 shows a view of the adapter piece 3.

The tubular piece 2 contains a locking groove 4 and the adapter piece 3 contains a plurality of locking elements 5. The locking groove 4 is formed on the outside of the tubular piece 2 and surrounds the mounting axis MA. The locking elements 5 are arranged side by side on the adapter piece 3 in a circumferential direction UR surrounding the mounting axis MA, and are separated by a plurality of axially aligned cuts 6. As a result, the locking elements 5 are axially aligned and are radial resilient. As shown in Fig. 1, the locking elements 5 engage radially in the locking groove 4 and axially and preferably detachable fix the adapter piece 3 to the tubular piece 2.

The tubular piece 2 also contains a stop projection 7 surrounding the mounting axis MA and the adapter piece 3 contains a stop recess 8 surrounding the mounting axis MA. The stop projection 7 is formed on the outside of the tubular piece 2 and the stop recess 8 is formed on the inside of the adapter piece 3. As shown in Fig. 1, the stop projection 7 and the stop recess 8 abut axially on one another, so that the stop projection 7 and the stop recess 8 form an axial stop for the adapter piece 3 on the tubular piece 2.

Transversely to the mounting axis MA, the tubular piece 2 contains a polygonal outer contour 9 at the stop projection 7 and the adapter piece 3 contains a polygonal inner contour 10 at the stop recess 8. The outer contour 9 and the inner contour 10 are adjacent to each other and are rotationally asymmetrical. Thus, once the tubular piece 2 is disposed in the adapter piece 3, the outer contour 9 and the inner contour 10 prevent the adapter piece 3 from rotating against the tubular piece 3. As a result, the tubular piece 2 and the adapter piece 3 are non-rotatably fixed to each other. The outer contour 9 of the tubular piece 2 at the stop projection 7 forms a first form-fitting element 11 of a form-fitting unit 13, and the inner contour 10 of the adapter piece 3 at the stop recess 8 forms a second form-fitting element 12 of the form-fitting unit 13.

Thus, by means of the form-fitting unit 13, the tubular piece 2 and the adapter piece 3 are non-rotatably fixed and a conventionally necessary material-boding between the tubular piece 2 and the adapter piece 3 can be avoided. This can simplify the manufacture of the coupling device 1.

The coupling device 1 is provided for connecting a heat exchanger of a motor vehicle to a standardized connector. Thereby, the tubular piece 2 may form a part of the heat exchanger and the adapter piece 3 may be adapted with its outer contour to an inner contour of the standardized connector. The standardized connector may in particular be a VDA-Connector as described above.

## Claims

1. Coupling device (1) for connecting a heat exchanger to a standardized connector,
- wherein the coupling device (1) comprises a tubular piece (2) and a hollow cylindrical adapter piece (3),
- wherein the tubular piece (2) is inserted into the adapter piece (3) along a mounting axis (MA) to a predetermined distance and is axially fixed to the adapter piece (3),
- wherein the coupling device (1) contains a form-fitting unit (13) and the form-fitting unit (13) non-rotatably fixes the adapter piece (3) to the tubular piece (2),
- wherein the tubular piece (2) contains an outer stop projection (7) which at least partially surrounds the mounting axis (MA),
- wherein the adapter piece (3) contains an inner stop recess (8) which at least partially surrounds the mounting axis (MA), and
- wherein the stop projection (7) engages radially in the stop recess (8) and thereby the adapter piece (3) abuts axially against the tubular piece (2),
**characterized**
- **in that** the tubular piece (2) contains an outer contour (9) arranged transversely to the mounting axis (MA) and lying on the outside at the stop projection (7),
- **in that** the adapter piece (3) contains an inner contour (10) arranged transversely to the mounting axis (MA) and lying on the inside at the stop recess (8),
- **in that** the outer contour (9) and the inner contour (10) abut each other and are rotationally asymmetrical.

2. Coupling device according to claim 1,
**characterized**
**in that** the tubular piece (2) is made of metal and the adapter piece (3) is made of plastic.

3. Coupling device according to claim 1 or 2,
**characterized**
- **in that** the form-fitting unit (13) comprises a first form-fitting element (11) and a second form-fitting element (12),
- **in that** the first form-fitting element (11) is formed on the tubular piece (2) and the second form-fitting element (12) is formed on the adapter piece (3), and
- **in that** the first form-fitting element (11) and the second form-fitting element (13) are insertable into each other along the mounting axis (MA) and interlock in a circumferential direction (UR) surrounding the mounting axis (MA) in a form-fitting manner.

4. Coupling device according to claim 3,
**characterized**
**in that** the first form-fitting element (11) is formed by the outer contour (9) of the tubular piece (2) on the stop projection (7) and the second form-fitting element (12) is formed by the inner contour (10) of the adapter piece (3) on the stop recess (8).

5. Coupling device according to claim 1 to 4,
**characterized**
**in that** the outer contour (9) of the tubular piece (2) at the stop projection (7) and the inner contour (10) of the adapter piece (3) at the stop recess (8) are each polygonal.

6. Coupling device according to any one of the preceding claims,
**characterized**
- **in that** the tubular piece (2) contains an outer locking groove (4) surrounding the mounting axis (MA) at least in some areas and the adapter piece (3) contains at least one resilient locking element (5) aligned axially, and
- **in that** the at least one locking element (5) of the adapter piece (3) engages radially in the locking groove (4) of the tubular piece (2) and thereby the adapter piece (3) is axially fixed to the tubular piece (2).

7. Coupling device according to any one of the preceding claims and a hollow cylindrical standardized connector, **characterized in that** the adapter piece (3) is inserted into the standardized connector along the mounting axis (MA), and
- **in that** the standardized connector is axially fixed to the adapter piece (3).

8. Coupling device according to claim 7,
**characterized**
**in that** an outer contour of the adapter piece (3) is adapted to an inner contour of the standardized connector in such a way that the adapter piece (3) and the standardized connector can be axially fixed to one another.

## Patentansprüche

1. Kopplungsvorrichtung (1) zum Anschluss eines Wärmetauschers an einen Normstecker,
- wobei die Kopplungsvorrichtung (1) ein Rohrstück (2) und ein hohlzylindrisches Adapterstück (3) umfasst,
- wobei das Rohrstück (2) entlang einer Montageachse (MA) bis zu einem vorbestimmten Abstand in das Adapterstück (3) eingesetzt und axial am Adapterstück (3) befestigt ist,
- wobei die Kopplungsvorrichtung (1) eine Formschlusseinheit (13) enthält und die Formschlusseinheit (13) das Adapterstück (3) drehfest an dem Rohrstück (2) befestigt,
- wobei das Rohrstück (2) einen äußeren Anschlagvorsprung (7) enthält, der die Montageachse (MA) zumindest teilweise umgibt,
- wobei das Adapterstück (3) eine innere Anschlagaussparung (8) enthält, die die Montageachse (MA) zumindest teilweise umgibt, und
- wobei der Anschlagvorsprung (7) radial in die Anschlagaussparung (8) eingreift und dadurch das Adapterstück (3) axial an dem Rohrstück (2) anliegt,
**dadurch gekennzeichnet,**
- **dass** das Rohrstück (2) eine quer zur Montageachse (MA) angeordnete und außen am Anschlagvorsprung (7) liegende Außenkontur (9) enthält,
- **dass** das Adapterstück (3) eine quer zur Montageachse (MA) angeordnete und innen an der Anschlagaussparung (8) liegende Innenkontur (10) enthält,
- **dass** die Außenkontur (9) und die Innenkontur (10) aneinanderstoßen und rotationsasymmetrisch sind.

2. Kopplungsvorrichtung nach Anspruch 1,
**dadurch gekennzeichnet,**
**dass** das Rohrstück (2) aus Metall hergestellt ist und das Adapterstück (3) aus Kunststoff hergestellt ist.

3. Kopplungsvorrichtung nach Anspruch 1 oder 2,
**dadurch gekennzeichnet,**
- **dass** die Formschlusseinheit (13) ein erstes Formschlusselement (11) und ein zweites Formschlusselement (12) umfasst,
- **dass** das erste Formschlusselement (11) an dem Rohrstück (2) gebildet ist und das zweite Formschlusselement (12) an dem Adapterstück (3) gebildet ist, und
- **dass** das erste Formschlusselement (11) und das zweite Formschlusselement (13) entlang der Montageachse (MA) ineinander einsetzbar sind und in einer die Montageachse (MA) umgebenden Umfangsrichtung (UR) formschlüssig ineinandergreifen.

4. Kopplungsvorrichtung nach Anspruch 3,
**dadurch gekennzeichnet,**
**dass** das erste Formschlusselement (11) durch die Außenkontur (9) des Rohrstücks (2) an dem Anschlagvorsprung (7) gebildet ist und das zweite Formschlusselement (12) durch die Innenkontur (10) des Adapterstücks (3) an der Anschlagaussparung (8) gebildet ist.

5. Kopplungsvorrichtung nach einem der Ansprüche 1 bis 4,
**dadurch gekennzeichnet,**
**dass** die Außenkontur (9) des Rohrstücks (2) am Anschlagvorsprung (7) und die Innenkontur (10) des Adapterstücks (3) an der Anschlagaussparung (8) jeweils polygonal sind.

6. Kopplungsvorrichtung nach einem der vorstehenden Ansprüche,
**dadurch gekennzeichnet,**
- **dass** das Rohrstück (2) eine die Montageachse (MA) zumindest bereichsweise umlaufende äußere Verriegelungsnut (4) enthält und das Adapterstück (3) mindestens ein axial ausgerichtetes federndes Verriegelungselement (5) enthält, und
- **dass** das mindestens eine Verriegelungselement (5) des Adapterstücks (3) radial in die Verriegelungsnut (4) des Rohrstücks (2) eingreift und dadurch das Adapterstück (3) axial an dem Rohrstück (2) befestigt ist.

7. Kopplungsvorrichtung nach einem der vorstehenden Ansprüche und ein hohlzylindrischer Normstecker, **dadurch gekennzeichnet, dass** das Adapterstück (3) entlang der Montageachse (MA) in den Normstecker eingesetzt ist und
- dass der Normstecker axial an dem Adapterstück (3) befestigt ist.

8. Kopplungsvorrichtung nach Anspruch 7,
**dadurch gekennzeichnet,**
**dass** eine Außenkontur des Adapterstücks (3) an eine Innenkontur des Normsteckers derart angepasst ist, sodass das Adapterstück (3) und der Normstecker axial aneinander befestigt werden können.

## Revendications

1. Dispositif de couplage (1) pour connecter un échangeur de chaleur à un connecteur normalisé,
- dans lequel le dispositif de couplage (1) comprend une pièce tubulaire (2) et une pièce d'adaptation cylindrique creuse (3),
- dans lequel la pièce tubulaire (2) est insérée dans la pièce d'adaptation (3) le long d'un axe de montage (MA) sur une distance prédéterminée et est fixée axialement à la pièce d'adaptation (3),
- dans lequel le dispositif de couplage (1) contient une unité d'ajustement par complémentarité de formes (13) et l'unité d'ajustement par complémentarité de formes (13) fixe de manière non rotative la pièce d'adaptation (3) à la pièce tubulaire (2),
- dans lequel la pièce tubulaire (2) contient une saillie de butée extérieure (7) qui entoure au moins partiellement l'axe de montage (MA),
- dans lequel la pièce d'adaptation (3) contient un évidement de butée interne (8) qui entoure au moins partiellement l'axe de montage (MA), et
- dans lequel la saillie de butée (7) vient en prise radialement dans l'évidement de butée (8) et ainsi la pièce d'adaptation (3) vient en butée axialement contre la pièce tubulaire (2),
**caractérisé**
- **en ce que** la pièce tubulaire (2) contient un contour extérieur (9) agencé transversalement à l'axe de montage (MA) et se trouvant sur l'extérieur au niveau de la saillie de butée (7),
- **en ce que** la pièce d'adaptation (3) contient un contour intérieur (10) agencé transversalement à l'axe de montage (MA) et se trouvant sur l'intérieur au niveau de l'évidement de butée (8),
- **en ce que** le contour extérieur (9) et le contour intérieur (10) sont en butée mutuellement et sont asymétriques en rotation.

2. Dispositif de couplage selon la revendication 1,
**caractérisé**
**en ce que** la pièce tubulaire (2) est réalisée en métal et la pièce d'adaptation (3) est réalisée en matière plastique.

3. Dispositif de couplage selon la revendication 1 ou 2,
**caractérisé**
- **en ce que** l'unité d'ajustement par complémentarité de formes (13) comprend un premier élément d'ajustement par complémentarité de formes (11) et un second élément d'ajustement par complémentarité de formes (12),
- **en ce que** le premier élément d'ajustement par complémentarité de formes (11) est formé sur la pièce tubulaire (2) et le second élément d'ajustement par complémentarité de formes (12) est formé sur la pièce d'adaptation (3), et
- **en ce que** le premier élément d'ajustement par complémentarité de formes (11) et le second élément d'ajustement par complémentarité de formes (13) peuvent être insérés l'un dans l'autre le long de l'axe de montage (MA) et se verrouillent mutuellement dans une direction circonférentielle (UR) entourant l'axe de montage (MA) d'une manière à ajustement par complémentarité de formes.

4. Dispositif de couplage selon la revendication 3,
**caractérisé**
**en ce que** le premier élément d'ajustement par complémentarité de formes (11) est formé par le contour extérieur (9) de la pièce tubulaire (2) sur la saillie de butée (7) et le second élément d'ajustement par complémentarité de formes (12) est formé par le contour intérieur (10) de la pièce d'adaptation (3) sur l'évidement de butée (8).

5. Dispositif de couplage selon les revendications 1 à 4,
**caractérisé**
**en ce que** le contour extérieur (9) de la pièce tubulaire (2) au niveau de la saillie de butée (7) et le contour intérieur (10) de la pièce d'adaptation (3) au niveau de l'évidement de butée (8) sont chacun polygonaux.

6. Dispositif de couplage selon l'une quelconque des revendications précédentes,
**caractérisé**
- **en ce que** la pièce tubulaire (2) contient une rainure de verrouillage externe (4) entourant l'axe de montage (MA) au moins par endroits et la pièce d'adaptation (3) contient au moins un élément de verrouillage élastique (5) aligné axialement, et
- **en ce que** le au moins un élément de verrouillage (5) de la pièce d'adaptation (3) vient en prise radialement dans la rainure de verrouillage (4) de la pièce tubulaire (2) et la pièce d'adaptation (3) est ainsi fixée axialement à la pièce tubulaire (2).

7. Dispositif de couplage selon l'une quelconque des revendications précédentes et connecteur normalisé cylindrique creux, **caractérisé en ce que** la pièce d'adaptation (3) est insérée dans le connecteur normalisé le long de l'axe de montage (MA), et
- **en ce que** le connecteur normalisé est fixé axialement à la pièce d'adaptation (3).

8. Dispositif de couplage selon la revendication 7,
**caractérisé**
**en ce qu'** un contour extérieur de la pièce d'adaptation (3) est adapté à un contour intérieur du connecteur normalisé de telle sorte que la pièce d'adaptation (3) et le connecteur normalisé peuvent être fixés axialement l'un à l'autre.
